# FASCICULE DE BREVET EUROPEEN

(11) **EP 0 994 594 B1**
(45) Date de publication et mention de la délivrance du brevet: **12.04.2006**
(21) Numéro de dépôt: 99402488.3
(22) Date de dépôt: 11.10.1999
(51) Int. Cl.: H04J 14/02

(54) **Procédé et dispositif d'extraction et insertion de canal pour transmission optique à multiplexage de longueurs d'onde**
Verfahren und Vorrichtung zum herausziehen und einsetzen von einem Kanal für optische WDM Übertragung
Method and apparatus for extraction and insertion of a channel for a wavelength division multiplexing optical transmission

(30) Priorité: 15.10.1998 FR 9812935
(43) Date de publication de la demande: 19.04.2000
(73) Titulaire: ALCATEL, 75008 Paris (FR)
(72) Inventeur: Bruyère, Franck, 75014 Paris (FR); Jourdan, Amaury, 92310 Sèvres (FR); Daloura, Jorge, 91310 Longpont Sur Orge (FR)
(74) Mandataire: Fournier, Michel Robert Marie

(56) Documents cités:
- EP-A- 0 734 129
- EP-A- 0 844 757
- EP-A- 0 862 071
- WO-A-98/08322

## Description

L'invention se situe dans le domaine des transmissions optiques utilisant des multiplex de longueurs d'onde. Elle concerne notamment un procédé pour effectuer des opérations d'extraction et/ou d'insertion sélectives d'un ou plusieurs canaux d'un tel multiplex.

De telles opérations sont utiles pour assurer des fonctions de routage ou d'aiguillage. Elles permettent par exemple de modifier les informations d'un ou plusieurs canaux ou de changer la longueur d'onde du canal portant une information. Un dispositif d'extraction et insertion effectuant ces opérations est habituellement appelé OADM ou multiplexeur optique d'insertion-extraction.

Le procédé selon cette invention comporte des opérations qui sont connues en elles-mêmes du document de brevet EP-A-0 838 918 publié le 29 avril 1998 et qui sont les opérations suivantes, ces opérations étant décrites ici dans des termes autres que ceux de ce document :
- des informations à transmettre étant portées par une pluralité de canaux, certains desdits canaux étant assemblés pour former un multiplex amont, les canaux de ce multiplex étant répartis dans le spectre des longueurs d'onde, on sépare les canaux du multiplex amont dans un module de sélection en au moins un groupe extrait et un groupe en transit,
- on fait passer le groupe extrait dans un circuit latéral,
- au moins pendant des périodes de réinsertion, on fait passer au moins une partie du groupe extrait dans un amplificateur optique, cet amplificateur constituant un amplificateur latéral,
- on assemble le groupe en transit avec ladite partie du groupe extrait pour former un multiplex aval.

Les périodes de réinsertion se produisent lorsque le groupe extrait n'a pas à être modifié.

En pratique, le circuit latéral impose au groupe extrait un perte de puissance parasite. Or dans un système de transmission, il est souhaité que chaque multiplex soit équilibré, c'est-à-dire que tous les canaux de ce multiplex aient sensiblement une même puissance. Dans le cas usuel où le multiplex amont est équilibré un problème général est donc d'assurer aussi l'équilibrage du multiplex aval et un problème plus particulier est de réaliser cet équilibrage pendant lesdites périodes de réinsertion malgré lesdites pertes du circuit latéral.

Pour résoudre ce problème plus particulier, on peut considérer les solutions suivantes.

Selon une première solution, le module de sélection est réalisé de manière à offrir au groupe de canaux en transit un circuit qui n'est pas emprunté par le groupe de canaux extrait. On place alors sur ce circuit un élément atténuateur qui permet de compenser les pertes du circuit latéral, éventuellement avec l'aide de l'amplificateur latéral. Cette première solution présente deux inconvénients, l'un étant que la puissance des canaux serait plus faible dans le multiplex aval que dans le multiplex amont, ce qui amènerait à placer un amplificateur en sortie du module de sélection, l'autre étant que la réalisation de ce module serait plus complexe et coûteuse que celle des modules usuels.

Selon une deuxième solution, on règle le gain de l'amplificateur latéral pour que ce gain compense par lui même les pertes du circuit latéral. Cette deuxième solution n'est pas décrite par le document de brevet EP-A 0 838 918, car ce document indique pour cet amplificateur seulement une fonction de commutation alors que le facteur multiplicateur définissant le gain d'un amplificateur assurant une telle fonction est typiquement tantôt nul pour couper un circuit optique incluant cet amplificateur, tantôt égal à un pour transmettre les ondes optiques sans changer leurs puissances. Elle présenterait l'inconvénient que le réglage initial du gain de l'amplificateur serait délicat et que la compensation des pertes pourrait ensuite être perturbée par des modifications de ce gain causées par des variations de la puissance du multiplex amont et/ou par une dérive des caractéristiques de l'amplificateur lui même ou des organes assurant son pompage.

Une troisième solution est connue par un article de F. Shehadeh, R.S. Vodhanel, M. Krain, C. Gibbons, R. E. Wagner, et M. Ali : "Gain-Equalized, Eight-Wavelength WDM Optical Add-Drop Mutiplexer with an 8-dB Dynamic Range", IEEE Photonics Technology Letters, vol.7, N°9 september 1995 pp 1075-1077 : les canaux du multiplex sortant du dispositif d'extraction et d'insertion sont séparés les uns des autres dans un démultiplexeur, puis la puissance de chacun de ces canaux est ajustée à une valeur commune, enfin ces canaux sont superposés pour constituer un multiplex aval équilibré. Cette solution a l'inconvénient d'être coûteuse.

La présente invention a notamment pour but d'équilibrer d'une manière permanente et peu coûteuse le multiplex sortant d'un dispositif d'extraction et d'insertion lorsqu'un multiplex reçu par ce dispositif est équilibré et lorsque ce dispositif extrait certains des canaux de ce multiplex reçu puis réinsère ces mêmes canaux dans ce multiplex sortant. Elle a plus généralement pour but d'éviter qu'un dispositif de ce genre modifie les rapports des puissances respectives des canaux d'un multiplex lorsque certains de ces canaux sont ainsi extraits puis réinsérés.

Pour atteindre ces buts elle tire profit de deux faits. L'un de ces faits est que les amplificateurs optiques connus pouvant constituer ledit amplificateur latéral sont des amplificateurs à saturation progressive, c'est à dire qu'ils ont un gain décroissant en fonction de la puissance totale des ondes optiques qui sont reçues par ces amplificateurs pour y être amplifiées. L'autre de ces faits est que, dans des modules peu coûteux qui constituent le module de sélection des dispositifs d'extraction et d'insertion connus, des ondes optiques pourraient être guidées selon une voie différente de celles qui sont utilisées dans ces dispositifs connus.

Le procédé selon cette invention utilise au moins un amplificateur latéral à saturation progressive et il est caractérisé par le fait qu'on donne au gain d'un tel amplificateur latéral des valeurs suffisantes pour faire croître une onde optique passant dans ledit circuit latéral et cet amplificateur en même temps que ladite partie du groupe extrait, ledit module de sélection étant choisi pour permettre à cette onde de circuler selon une boucle fermée incluant en outre ce module, cette onde constituant une onde de boucle. En outre, on favorise pour cette onde une longueur d'onde extérieure à un domaine spectral occupé par lesdits canaux.

L'invention a aussi pour objet un dispositif d'extraction et d'insertion apte à recevoir un multiplex amont constitué de canaux répartis en longueurs d'onde dans un domaine spectral de transmission, ledit dispositif comportant :
- un module de sélection séparant d'une part lesdits canaux du multiplex amont en au moins un groupe extrait et un groupe en transit, ce module formant d'autre part un multiplex aval en assemblant ce groupe en transit avec un groupe inséré reçu par ce module et constitué d'au moins un canal prenant dans le spectre des longueurs d'onde une place différente de celle de ce groupe en transit, et
- un organe latéral apte à réaliser un circuit latéral transmettant au moins une partie dudit groupe extrait audit module de sélection pour constituer ledit groupe inséré de sorte que ce groupe inséré constitue alors un groupe réinséré, ce circuit latéral incluant un ensemble amplificateur ayant un gain à saturation progressive,
ce dispositif étant caractérisé par le fait que ledit gain de l'ensemble amplificateur a des valeurs suffisantes pour faire croître une onde optique passant dans ledit circuit latéral et cet ensemble amplificateur en même temps que ledit groupe réinséré, ledit module de sélection permettant à cette onde de circuler selon une boucle fermée incluant en outre ce module, cette onde constituant une onde de boucle, cette boucle constituant une boucle de réglage de gain, ce dispositif étant en outre caractérisé par le fait qu'il comporte un élément d'accrochage spectral monté dans ladite boucle de réglage de gain, cet élément favorisant une longueur d'onde extérieure audit domaine spectral de transmission de manière à imposer à ladite onde de boucle une longueur d'onde également extérieure à ce domaine.

A l'aide des figures ci-jointes on va décrire ci-après à titre d'exemples diverses possibilités de mise en oeuvre conformes à l'invention. Lorsqu'un élément apparaît sur plusieurs figures il y est désigné par les mêmes lettres et/ou chiffres de référence.

La figure 1 représente une configuration d'un système de transmission connu, cette configuration étant réalisée pendant une période de réinsertion.

La figure 2 représente une configuration d'un système de transmission comportant un dispositif d'extraction et insertion selon cette invention, cette configuration étant réalisée pendant une période de réinsertion.

La figure 3 représente une configuration du système de la figure 2, cette configuration étant réalisée en dehors des périodes de réinsertion.

Les figures 4, 5 et 6 représentent respectivement un premier, un deuxième et un troisième mode de réalisation d'un module de sélection du système des figures 2 et 3.

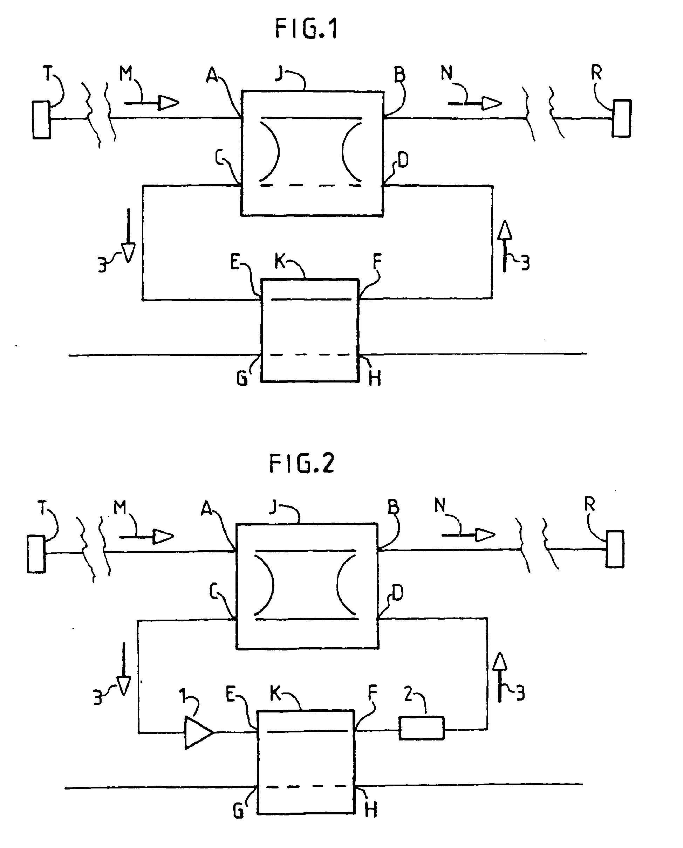

Chacun des systèmes des figures 1 et 2 transmet des multiplex constitués chacun par une pluralité de canaux. Ces canaux sont constitués par des ondes optiques portant des informations à transmettre. Ils sont situés en longueur d'onde dans des plages spectrales respectives prédéterminées, toutes ces plages étant situées dans un domaine spectral prédéterminé qui sera appelé ci-après domaine spectral de transmission. Chacun de ces canaux est typiquement constitué par une onde porteuse qui a une longueur d'onde propre unique. Mais cette onde est modulée par un signal à transmettre ou par plusieurs tels signaux pouvant être multiplexés dans le temps, de sorte que son spectre est élargi et peut occuper toute la plage spectrale de ce canal. Ces multiplex et ces canaux sont guidés au sein de ces systèmes qui comportent pour cela, au moins pour les distances importantes, des fibres optiques.

Chacun des deux systèmes comporte les éléments suivants :
- Des moyens émetteurs T pour recevoir des informations à transmettre et pour fournir en réponse un multiplex qui est transmis par une fibre optique à un dispositif d'extraction et d'insertion J, K. Le multiplex reçu par ce dispositif constitue un multiplex amont M. Ces moyens sont tels que les canaux de ce multiplex aient respectivement des puissances d'entrée au plus égales à des puissances d'entrée maximales prédéterminées. Cette puissance d'entrée maximale est typiquement la même pour tous ces canaux.
- Le dispositif d'extraction et d'insertion J, K reçoit le multiplex amont et fournit un autre multiplex constituant un multiplex aval N. Typiquement les plages spectrales sont les mêmes dans les deux multiplex amont et aval. Mais les positions ou les étendues de ces plages dans le spectre des longueurs d'onde peuvent faire apparaître des différences entre ces deux multiplex et certaines plages peuvent être vides dans l'un d'eux.
- Enfin des moyens récepteurs R pour recevoir le multiplex aval par l'intermédiaire d'une autre fibre optique et pour fournir en réponse celles des informations à transmettre qui sont portées par les canaux de ce multiplex.

Le dispositif d'extraction et d'insertion comporte notamment un module de sélection J et un organe latéral K.

Le module de sélection J définit un "segment spectral sélectionné". Ce segment est constitué par une partie dudit domaine spectral de transmission. Il peut contenir une ou plusieurs desdites plages spectrales. Ces plages peuvent être adjacentes ou être séparées les unes des autres par d'autres plages spectrales qui peuvent ne pas être situées dans ce segment.

Ce module a deux ports constituant respectivement une entrée principale A pour recevoir le multiplex amont et une sortie principale B pour fournir le multiplex aval. Il a en outre deux ports constituant respectivement un port d'extraction C et un port d'insertion D. Il est apte à sélectionner d'une part le groupe de tous ceux des canaux du multiplex amont qui ne sont pas situés dans le segment spectral sélectionné et à guider ce groupe selon une voie de transit allant de cette entrée principale A à cette sortie principale B, ce groupe constituant un groupe en transit. Il est apte d'autre part à sélectionner le groupe de tous ceux des canaux du multiplex amont qui sont situés dans le segment spectral sélectionné et à guider ce groupe selon une voie d'extraction allant de cette entrée principale à ce port d'extraction C, ce groupe constituant un groupe extrait. Il est encore apte à guider des ondes optiques selon une voie d'insertion allant de son port d'insertion D à la sortie principale B lorsque ces ondes sont situées dans le segment spectral sélectionné, ces ondes constituant un groupe inséré. Ce groupe inséré inclut au moins un canal. Le multiplex aval est constitué par le groupe en transit et par ce groupe inséré. Le module de sélection est enfin apte à guider des ondes optiques selon une voie de guidage rétrograde allant de son port d'insertion à son port d'extraction lorsque ces ondes ne sont pas situées dans le segment spectral sélectionné. Pour tenir compte du cas non préféré où cette voie de guidage présenterait des pertes ou inclurait un amplificateur, on considérera ci-après que cette voie divise alors la puissance de ces ondes par un facteur de perte constituant un facteur de perte de guidage rétrograde. Ce facteur est typiquement égal à l'unité mais il peut lui être supérieur ou, en cas d'amplification interne au module, lui être inférieur.

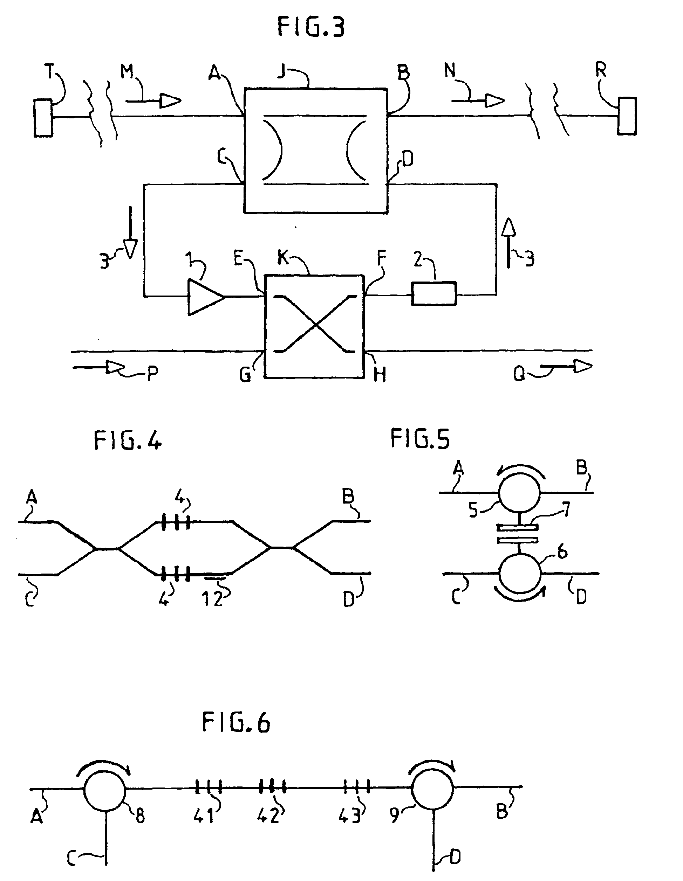

Sur les figures 1, 2 et 3 les voies de guidage ci-dessus sont symbolisées par des lignes internes à ce module, ces lignes étant en trait plein ou tireté selon que ces voies sont utilisées ou non. Quoique ces lignes soient complètement séparées les unes des autres sur ces figures il doit être compris que les modules de sélection usuels offrent aux ondes optiques seulement des voies dont chacun des tronçons est commun à plusieurs voies. De tels tronçons de voie seront décrits ci-après avec les modules des figures 3 et 4.

L'organe latéral K a au moins deux ports constituant un port d'extraction E et un port d'insertion F. Ce port d'extraction E est raccordé au port d'extraction C du module de sélection pour recevoir le groupe extrait. Pendant les périodes de réinsertion cet organe K transmet ce groupe extrait de son port d'extraction E à son port d'insertion F. Son port d'insertion est raccordé au port d'insertion du module de sélection de sorte que cet organe forme alors une partie d'un circuit latéral ouvert C-E-F-D allant du port d'extraction C au port d'insertion D du module de sélection en passant par cet organe. Ce circuit permet au groupe extrait transmis de constituer ledit groupe inséré. Ce groupe extrait et inséré sera appelé ci-après groupe réinséré.

L'organe latéral est typiquement un organe de commutation commandé K présentant en outre deux ports constituant respectivement une entrée latérale G et une sortie latérale H. Pendant les périodes de réinsertion, il est placé dans un état de transmission directe qui est représenté aux figures 1 et 2 et dans lequel il transmet le groupe extrait de son port d'extraction E à son port d'insertion F. En dehors de ces périodes, il est placé dans un état de transmission croisée représenté à la figure 3. Dans ce dernier état il transmet le groupe extrait de son port d'extraction E à la sortie latérale H et/ou il reçoit sur son entrée latérale G un groupe à insérer constitué d'au moins un canal situé dans le segment spectral sélectionné. Il transmet alors ce groupe à insérer de cette entrée latérale à son port d'insertion F de manière que ce groupe à insérer constitue ledit groupe inséré, c'est à dire que ce groupe soit inséré dans le multiplex aval par le module de sélection J.

Mais l'organe latéral pourrait avoir d'autres fonctions sans sortir du cadre de cette invention. Il pourrait par exemple surveiller une caractéristique de fréquence ou de forme des signaux portés par le groupe réinséré.

Le circuit latéral C-E-F-D inclut des éléments de perte et des éléments amplificateurs.

Ces éléments de perte divisent la puissance du groupe réinséré par un facteur de perte supérieur à un, ce facteur constituant un facteur de pertes latéral. Dans un mode de réalisation préféré ces éléments de perte font partie de l'organe latéral K.

Ces éléments amplificateurs incluent au moins un amplificateur optique constituant un amplificateur latéral et ils constituent un ensemble amplificateur.

Dans le mode de réalisation préféré de l'invention représenté aux figures 2 et 6, l'amplificateur latéral est unique et extérieur à cet organe. Dans un autre mode non représenté un amplificateur latéral pourrait, comme dans le système connu de la figure 1, constituer un interrupteur inclus dans un organe latéral de commutation tel que K et être éventuellement accompagné d'une autre amplificateur latéral extérieur à cet organe K.

Par ailleurs un système de transmission peut comporter plusieurs dispositifs d'extraction et d'insertion selon cette invention, tels que J, K, pour recevoir plusieurs multiplex, tels que le multiplex amont M, par l'intermédiaire de plusieurs fibres optiques et pour fournir plusieurs multiplex, tels que le multiplex aval N, par l'intermédiaire de plusieurs autres fibres optiques, respectivement. Dans ce cas chacun de ces dispositifs comporte au moins un amplificateur latéral tel que 1 qui est avantageusement du type à pompage optique. De préférence alors l'ensemble de ces dispositifs comporte un seul organe de pompage qui est commun à un ensemble correspondant de ces amplificateurs latéraux.

Chaque amplificateur latéral, tel que 1, a une courbe de gain et il est apte à recevoir des ondes optiques et à transmettre ces ondes en multipliant la puissance de chacune de ces ondes par un gain défini par cette courbe pour chacune des valeurs d'une puissance incidente de cet amplificateur, cette puissance incidente étant la somme des puissances des ondes à amplifier reçues par cet amplificateur. Chaque canal reçu par un amplificateur latéral a donc une puissance au plus égale à une puissance actuelle maximale relative à cet amplificateur et définie à partir de ladite puissance d'entrée maximale de ce canal par les pertes et gains de ceux desdits éléments du circuit latéral qui précédent cet amplificateur dans ce circuit. Lorsque le système de l'invention est en service cette puissance incidente a une valeur actuelle, qui peut être constante ou varier. Le gain de l'amplificateur latéral est alors un gain actuel dont la valeur est définie à tout instant par la courbe de gain pour cette valeur actuelle de la puissance incidente.

Dans le cas simple où le circuit latéral comporte un seul amplificateur et où les éléments de perte sont disposés dans ce circuit après cet amplificateur, les puissances actuelles des canaux sont les mêmes que leurs puissances d'entrée. Dans un cas plus complexe où un second tel amplificateur est précédé par des éléments de perte et par un premier tel amplificateur les puissances actuelles maximales relatives à ce second amplificateur sont pour chaque canal égales à la puissance d'entrée maximale divisée par un facteur de perte de ces éléments de perte et multipliée par un gain actuel de ce premier amplificateur. Il en résulte que les courbes de gain respectives de tous les amplificateurs latéraux définissent un gain latéral pour chaque ensemble des valeurs des puissances incidentes respectives de ces amplificateurs, ce gain latéral étant le produit de tous les gains respectivement définis par ces courbes pour ces valeurs. Ce gain latéral décroît donc quand ces puissances incidentes croissent. Si un gain latéral actuel est celui qui est défini par les courbes de gain pour l'ensemble des valeurs actuelles des puissances incidentes, il apparaît que, entre l'entrée et la sortie principale du dispositif, la puissance du groupe réinséré est d'une part divisée par le facteur de perte latéral, d'autre part multipliée par le gain latéral actuel alors que la puissance du groupe en transit peut être inchangée.

Le système de la présente invention est caractérisé par le fait que les courbes de gain des amplificateurs latéraux tels que 1 définissent un gain latéral supérieur à un facteur de perte de boucle constitué par le produit du facteur de perte de guidage rétrograde par le facteur de perte latéral, ce gain étant défini pour un ensemble de valeurs de puissances incidentes constituant un ensemble initial maximal. La valeur de puissance incidente de chacun des amplificateurs latéraux est égale dans cet ensemble initial maximal à la somme des puissances maximales actuelles de ceux des canaux qui sont reçus par cet amplificateur, ces puissances maximales actuelles étant celles qui sont relatives à cet amplificateur.

Les caractéristiques prévues par cette invention pour les courbes de gain peuvent être obtenues par le choix du ou des amplificateurs latéraux et/ou par celui des puissances de pompage électrique ou optique de ces amplificateurs. Ce choix ne nécessite aucun ajustement précis puisqu'il suffit qu'une valeur du gain latéral soit supérieure à un seuil, cette valeur étant celle qui est définie par les courbes de gain pour des puissances incidentes égales aux puissances maximales actuelles du groupe réinséré. Ce seuil peut être connu à l'avance ou être déterminé expérimentalement ou même ne pas être déterminé spécifiquement si on élève progressivement le niveau d'au moins une dite courbe de gain jusqu'à la croissance d'une onde de boucle qui sera décrite plus loin. En pratique il est avantageux d'augmenter suffisamment ce niveau pour créer une marge de sécurité telle qu'une diminution éventuelle des gains des amplificateurs latéraux au cours du temps ne risque pas de faire passer le gain latéral au dessous du seuil. Une telle diminution de gain peut provenir d'une dégradation des caractéristiques de l'amplificateur lui même ou de son organe de pompage, ce qui abaisse le niveau de sa courbe de gain, ou encore d'une augmentation non prévue des puissances du multiplex.

Pour décrire l'effet de cette disposition de l'invention, il faut considérer une situation initiale éventuelle dans laquelle la puissance incidente de chaque amplificateur latéral est seulement la somme des puissances des canaux reçus par cet amplificateur. Dans cette situation, cette disposition crée un excès du gain latéral par rapport au facteur de perte latéral, et cela quelles que soient les variations des puissances d'entrée des canaux dans la limite de leurs dites valeurs maximales. Cet excès de gain a deux conséquences. Une première conséquence est que le groupe réinséré est relativement amplifié par cet excès de gain, ce qui crée un déséquilibre de puissance en faveur de ce groupe dans le multiplex aval. Une deuxième conséquence de cet excès de gain est liée au fait que le dispositif d'extraction et d'insertion permet à certaines ondes optiques de circuler selon une boucle fermée C-E-F-D-C. Ces ondes sont celles qui sont extérieures au segment spectral sélectionné. Cette boucle passe par le port d'extraction du module de sélection, puis elle suit le circuit latéral C-E-F-D jusqu'au port d'insertion D de ce module, enfin elle traverse ce module pour rejoindre le port d'extraction C de ce dernier. Dans la situation initiale ledit excès de gain est présent sur le trajet de cette boucle fermée. Il y fait donc naître une onde optique par effet laser. Cette onde est extérieure au segment spectral sélectionné et constitue l'onde de boucle. Sa puissance s'ajoute alors à celle des canaux des groupes extrait et réinséré pour constituer les puissances incidentes des amplificateurs latéraux. La situation initiale définie ci-dessus n'est donc ni souhaitable ni stable. Elle peut être réalisée mais d'une manière transitoire. Dès qu'elle l'est, l'onde de boucle croît en puissance. Les puissances incidentes des amplificateurs latéraux croissent donc, ce qui fait progressivement décroître le gain latéral et l'excès de gain. La croissance de l'onde de boucle s'arrête quand cet excès de gain qui l'a fait naître s'annule, c'est à dire quand le gain latéral devient égal au facteur de perte de boucle. L'onde de boucle maintient alors le gain latéral à la même valeur que ce facteur même si ce dernier varie quelque peu au cours du temps. La boucle qu'elle parcourt peut être appelée "boucle de réglage de gain".

Dans le mode de réalisation préféré, le groupe en transit ne subit ni perte ni amplification et les pertes subies par le groupe réinséré sont les mêmes que celles qui sont subies par l'onde de boucle. Dans le cas où de plus le multiplex amont était équilibré, cette invention procure donc d'une manière simple un équilibrage permanent et automatique du multiplex aval. En pratique ce cas est réalisé dans la mesure où les pertes subies par le groupe réinséré sont localisées dans l'organe latéral. Dans d'autres cas où le groupe extrait subit des pertes dans le module de sélection, l'équilibrage du multiplex aval peut être moins précis tout en étant avantageux.

Un couplage parasite pourrait apparaître dans le module de sélection entre le groupe en transit et l'onde de boucle. C'est pourquoi le dispositif d'extraction et d'insertion comporte en outre un élément d'accrochage spectral 2 monté dans la boucle de réglage de gain. Cet élément favorise une longueur d'onde extérieure audit domaine spectral de transmission de manière à imposer à l'onde de boucle une longueur d'onde également extérieure à ce domaine et constituant une longueur d'onde de boucle. Dans le mode de réalisation préféré, cet élément est un filtre passe bande monté en série dans le circuit latéral C-E-F-D. Il présente une sélectivité suffisamment faible pour ne pas introduire des pertes trop gênantes pour le groupe réinséré, cette sélectivité étant cependant suffisante pour imposer une longueur d'onde de boucle prédéterminée convenable.

Cette solution présente l'avantage de la simplicité. Bien entendu, de nombreuses autres solutions sont envisageables par l'homme du métier. Ainsi, dans d'autres modes de réalisation cet élément pourrait être monté en parallèle avec l'amplificateur dans le circuit latéral, ou en série à l'intérieur du module de sélection.

Divers modes de réalisation du module de sélection vont être décrits : Dans le mode de réalisation représenté à la figure 4, le module de sélection présente la forme d'un interféromètre de Mach-Zehnder à fibres optiques dont chacune des deux branches est munie d'un réseau de Bragg photo-inscrit constituant un filtre réjecteur 4. Cet interféromètre a été équilibré par un traitement aux rayons ultraviolets effectué dans un segment 12 de l'une de ces branches pour y ajuster la vitesse de propagation des ondes. Dans tous les modes de réalisation utilisant un tel filtre le segment spectral sélectionné est celui qui est réfléchi par ce filtre. Dans ce mode de réalisation, la voie de transit comporte deux tronçons A-4 et 4-B, la voie d'extraction comporte deux tronçons A-4 et 4-C, la voie d'insertion comporte deux tronçons D-4 et 4-B, et la voie de guidage rétrograde comporte deux tronçons D-4 et 4-C, chacun de ces tronçons étant divisé sur une partie de sa longueur entre les deux branches de l'interféromètre.

Selon la figure 5 le module de sélection comporte deux circulateurs optiques 5 et 6 de part et d'autre d'un résonateur Fabry-Pérot 7 constituant un filtre passe-bande. Le segment spectral sélectionné est celui qui est transmis par ce filtre. La voie de transit comporte les tronçons A-5, 5-7, 7-5 et 5-B. La voie d'extraction comporte les tronçons A-5, 5-7, 7-6 et 6-C. La voie d'insertion comporte les tronçons D-6, 6-7, 7-5 et 5-B. La voie de guidage rétrograde comporte les tronçons D-6, 6-7, 7-6, et 6-C. La boucle de réglage de gain suit le trajet C-E-F-D-6-7-6-C, les ports E et F étant ceux de l'organe latéral K connecté entre les ports C et D et non représenté. Le sens de propagation des ondes est imposé par un amplificateur latéral ou par un isolateur optique non représenté.

Un mode de réalisation aujourd'hui préféré du module de sélection est représenté à la figure 6. Un dispositif d'extraction et d'insertion incluant ce module a fait l'objet de mesures. Ce module comportait trois filtres réjecteurs 41, 42 et 43 montés en série entre deux circulateurs optiques 8 et 9 et accordés respectivement sur les longueurs d'onde centrales de trois canaux ayant des rangs R1, R2 et R4 dans un dit multiplex amont. Ces trois canaux constituaient le groupe réinséré. Un autre canal avait un rang R3 dans ce multiplex et constituait le groupe en transit. La colonne LO du tableau ci-dessous donne les rangs et les longueurs d'onde centrales de ces quatre canaux, en nanomètres. Les colonnes suivantes PA, PB1 et PB2 donnent les puissances des canaux correspondants en dB, ces puissances ayant été respectivement mesurées à l'entrée principale A, à la sortie principale B en l'absence d'amplificateur, et à cette même sortie en présence d'un amplificateur latéral du type à fibre dopée à l'erbium inclus selon cette invention.

| LO | PA | PB1 | PB2 |
|---|---|---|---|
| R1 :1549,32 | +2,6 | -30,2 | -9,2 |
| R2 :1552,52 | +2,5 | -30,2 | -8,9 |
| R3 : 1555,75 | +3,1 | -7,9 | -7,9 |
| R4 : 1558,98 | +3,1 | -29,9 | -8,2 |

La mise en oeuvre de cette invention a fait passer le déséquilibre du multiplex aval de 22,3 dB à 1,3 dB. Si on tient compte du déséquilibre du multiplex amont, il apparaît que cette mise en oeuvre a abaissé à 0,8 dB le déséquilibre introduit par le dispositif d'extraction et d'insertion.

## Revendications

1. Procédé d'extraction et insertion de canal pour transmission optique à multiplexage de longueurs d'onde, ce procédé incluant les opérations selon lesquelles :
- des informations à transmettre étant portées par une pluralité de canaux, certains desdits canaux étant assemblés pour former un multiplex amont (M), les canaux de ce multiplex étant répartis dans le spectre des longueurs d'onde, on sépare lesdits canaux du multiplex amont dans un module de sélection (J) en au moins un groupe extrait et un groupe en transit,
- on fait passer ledit groupe extrait dans un circuit latéral (C-E-F-D),
- au moins pendant des périodes de réinsertion, on fait passer au moins une partie dudit groupe extrait dans un ensemble amplificateur (1) ayant un gain à saturation progressive,
- on assemble ledit groupe en transit avec ladite partie du groupe extrait pour former un mutiplex aval (N),
ce procédé étant **caractérisé par le fait qu'**on donne audit gain de l'ensemble amplificateur (1) des valeurs suffisantes pour faire croître une onde optique passant dans ledit circuit latéral et cet ensemble amplificateur en même temps que ladite partie du groupe extrait, ledit module de sélection étant choisi pour permettre à cette onde de circuler selon une boucle fermée incluant en outre ce module, cette onde constituant une onde de boucle, et **par le fait qu'**on favorise pour ladite onde de boucle une longueur d'onde extérieure à un domaine spectral occupé par lesdits canaux.

2. Procédé selon la revendications 1, **caractérisé par le fait que** ledit circuit latéral (C-E-F-D) inclut un organe de commutation (K) utilisé en dehors desdites périodes de réinsertion pour écarter ledit groupe extrait desdits multiplex amont (M) et aval (N) et/ou pour insérer dans ce multiplex aval desdits canaux autres que ceux de ce multiplex amont et prenant au moins pour partie la place de ce groupe dans le spectre des longueurs d'onde.

3. Dispositif d'extraction et d'insertion (J, K) apte à recevoir un multiplex amont constitué de canaux répartis en longueurs d'onde dans un domaine spectral de transmission, ledit dispositif comportant :
- un module de sélection (J) séparant d'une part lesdits canaux du multiplex amont en au moins un groupe extrait et un groupe en transit, ce module formant d'autre part un multiplex aval en assemblant ce groupe en transit avec un groupe inséré reçu par ce module et constitué d'au moins un canal prenant dans le spectre des longueurs d'onde une place différente de celle de ce groupe en transit, et
- un organe latéral (K) apte à réaliser un circuit latéral (C-E-F-D) transmettant au moins une partie dudit groupe extrait audit module de sélection pour constituer ledit groupe inséré de sorte que ce groupe inséré constitue alors un groupe réinséré, ce circuit latéral incluant un ensemble amplificateur (1) ayant un gain à saturation progressive,
ce dispositif étant **caractérisé par le fait que** ledit gain de l'ensemble amplificateur (1) a des valeurs suffisantes pour faire croître une onde optique passant dans ledit circuit latéral (C-E-F-D) et cet ensemble amplificateur en même temps que ledit groupe réinséré, ledit module de sélection (J) permettant à cette onde de circuler selon une boucle fermée (C-E-F-D-C) incluant en outre ce module, cette onde constituant une onde de boucle, cette boucle constituant une boucle de réglage de gain, ce dispositif (J, K) étant en outre **caractérisé par le fait qu'**il comporte un élément d'accrochage spectral (2) monté dans ladite boucle de réglage de gain, cet élément favorisant une longueur d'onde extérieure audit domaine spectral de transmission de manière à imposer à ladite onde de boucle une longueur d'onde également extérieure à ce domaine.

4. Dispositif selon la revendication 3, **caractérisé par le fait que** ledit module de sélection (J) forme trois voies (A-B, A-C, D-B) guidant respectivement ledit groupe en transit, ledit groupe extrait et ledit groupe inséré, chacune de ces voies étant constituée de tronçons, chacun desdits tronçons (A-4, 4-B) de ladite voie guidant le groupe en transit étant aussi un dit tronçon pour l'une des deux dites voies guidant respectivement le groupe extrait et le groupe inséré.

5. Dispositif selon la revendication 4, **caractérisé par le fait que** ledit module de sélection (J) présente la forme d'un module d'insertion et d'extraction à filtre réjecteur (4).

6. Dispositif selon l'une des revendications 3 à 5, **caractérisé par le fait que** ledit organe latéral est un organe de commutation (K) permettant sur commande soit d'assembler ledit groupe réinséré audit groupe en transit pour constituer ledit multiplex aval (N), soit d'écarter ledit groupe extrait desdits multiplex amont (M) et aval et/ou d'insérer dans ce multiplex aval des canaux autres que ceux de ce multiplex amont

7. Dispositif selon l'une des revendications 3 à 6, **caractérisé par le fait que** ledit élément d'accrochage spectral (2) est un filtre passe bande monté en série dans le circuit latéral (C-E-F-D) et présentant une sélectivité faible mais suffisante pour imposer à ladite onde de boucle une longueur d'onde prédéterminée.

## Claims

1. Method of dropping and adding channels for use in wavelength-division multiplex optical transmission, the method including operations according to which:
- information to be transmitted being carried by a plurality of channels, some of said channels being assembled to form an upstream multiplex (M), and the channels of said multiplex being distributed in the wavelength spectrum, said channels of the upstream multiplex are separated in a selection module (J) into at least one dropped group and one transit group,
- said dropped group is diverted to a lateral circuit (C-E-F-D),
- at least during reinsertion periods, at least a part of said dropped group is diverted to an amplifier system (1) having a progressive saturation gain, and
- said transit group is assembled with said part of the dropped group to form a downstream multiplex (N),
said method being **characterised in that** said gain of the amplifier system (1) is given sufficient values to give rise to an optical wave in said lateral circuit and said amplifier system at the same time as said part of the dropped group, said selection module being selected to enable said wave to circulate in a closed loop further including said module and said wave constituting a loop wave, and **in that** a preferred wavelength for said loop wave is external to a spectrum occupied by said channels.

2. Method according to claim 1, **characterised in that** said lateral circuit (C-E-F-D) includes a switching unit (K) used outside said reinsertion periods to separate said dropped group from said upstream (M) and downstream (N) multiplexes and/or to add to said downstream multiplex said channels other than those of said upstream multiplex and substituted at least in part for said group in the spectrum of wavelengths.

3. Add and drop system (J, K) adopted to receive an upstream multiplex made up of channels divided in wavelength in a transmission spectrum, said system including:
- a selection module (J) separating said channels of the upstream multiplex into at least one dropped group and one transit group, said module forming a downstream multiplex by assembling said transit group with an added group received by said module and consisting of at least one channel at a different place in the spectrum of wavelengths from said transit group, and
- a lateral unit (K) adapted to form a lateral circuit (C-E-F-D) transmitting at least a part of said dropped group to said selection module to constitute said added group so that said added group then constitutes a reinserted group, said lateral circuit including an amplifier system (1) having a progressive saturation gain,
said system being **characterised in that** said gain of the amplifier system (1) has values sufficient to give rise to an optical wave in said lateral circuit (C-E-F-D) and said amplifier system at the same time as said reinserted group, said selection module (J) enabling said wave to circulate in a closed loop (C-E-F-D-C) also including said module, said wave constituting a loop wave, said loop constituting a gain adjustment loop, and said system (J, K) further being **characterised in that** it includes a spectrum locking element (2) in said gain adjustment loop and favouring a wavelength external to said transmission spectrum so as to impose on said loop wave a wavelength also external to said spectrum.

4. System according to claim 3, **characterised in that** said selection module (J) forms three channels (A-B, A-C, D-B) respectively guiding said transit group, said dropped group and said added group, each of said channels being made up of sections and each of said sections (A-4, 4-B) of said channel guiding the transit group being also a section for one of said two channels respectively guiding the dropped group and the added group.

5. System according to claim 4, **characterised in that** said selection module (J) takes the form of a drop and add module incorporating a rejecter filter (4).

6. System according to any of claims 3 to 5, **characterised in that** said lateral unit is a switching unit (K) adapted on command to assemble said reinserted group to said transit group to constitute said downstream multiplex (N) or to separate said extracted group from said upstream (M) and downstream multiplexes and/or to add to said downstream multiplexes channels other than those of said upstream multiplex.

7. System according to any of claims 3 to 6, **characterised in that** said spectrum locking element (2) is a band-pass filter connected in series in the lateral circuit (C-E-F-D) and having a weak selectivity sufficiently high to impose a predetermined wavelength on said loop wave.

## Patentansprüche

1. Verfahren zum Herausziehen und Einsetzen von einem Kanal für optische WDM-Übertragung, wobei dieses Verfahren die Arbeitsgänge einschließt, gemäß denen:
- da zu übertragende Informationen von einer Vielzahl von Kanälen getragen werden, einige dieser Kanäle zusammengefügt sind, um ein vorgelagertes Multiplex (M) zu bilden und die Kanäle dieses Multiplex im Spektrum der Wellenlängen verteilt sind, man diese Kanäle des vorgelagerten Multiplex in einem Auswahlmodul (J) in mindestens eine herausgezogene Gruppe und eine Gruppe im Durchgang trennt,
- man die herausgezogene Gruppe in einen Seitenkreis (C-E-F-D) leitet,
- man zumindest während der Wiedereinfügungsperioden mindestens einen Teil dieser herausgezogenen Gruppe in einen Verstärkerkomplex (1) laufen lässt, wobei dieser einen Gewinn mit progressiver Sättigung hat,
- man die Gruppe im Durchgang mit diesem Teil der herausgezogenen Gruppe zusammenfügt, um ein nachgelagertes Multiplex (N) zu bilden,
wobei dieses Verfahren **dadurch gekennzeichnet ist, dass** man diesem Gewinn des Verstärkerkomplexes (1) ausreichende Werte gibt, damit eine in diesem Seitenkreis und diesem Verstärkerkomplex laufende optische Welle gleichzeitig mit diesem Teil der herausgezogenen Gruppe wächst, wobei dieses Auswahlmodul so gewählt wird, dass es dieser Welle ermöglicht, gemäß einer Schleife ohne Ausgang , die außerdem dieses Modul beinhaltet, zu verlaufen, wobei diese Welle eine Schleifenwelle bildet, und **dadurch gekennzeichnet ist, dass** man für diese Schleifenwelle eine Wellenlänge außerhalb eines von diesen Kanälen belegten Spektralbereichs begünstigt.

2. Verfahren gemäß Anspruch 1, **dadurch gekennzeichnet, dass** dieser seitliche Kreis (C-E-F-D) ein Schaltorgan (K) beinhaltet, das außerhalb dieser Wiedereinsetzperioden verwendet wird, um diese herausgezogene Gruppe von diesen vor- (M) und nachgelagerten (N) Multiplexen zu entfernen und/oder in dieses nachgelagerte Multiplex dieser Kanäle andere als diejenigen aus diesem vorgelagerten Multiplex einzusetzen, die mindestens teilweise den Platz dieser Gruppe im Spektrum der Wellenlängen einnehmen.

3. Vorrichtung zum Herausziehen und Einsetzen (J, K), die im Stande ist, ein vorgelagertes Multiplex aufzunehmen, das aus Kanälen besteht, die in einem Übertragungsspektralbereich in Wellenlängen aufgeteilt sind, wobei diese Vorrichtung folgendes beinhaltet:
- ein Auswahlmodul (J), das zum einen diese Kanäle des vorgelagerten Multiplex in mindestens eine herausgezogene Gruppe und eine Gruppe im Durchgang trennt, wobei dieses Modul zum anderen ein nachgelagertes Multiplex bildet, indem diese Gruppe im Durchgang mit einer eingesetzten Gruppe zusammengefügt wird, die von diesem Modul erhalten wird und aus mindestens einem Kanal besteht, der im Spektrum der Wellenlängen einen anderen Platz einnimmt als diese Gruppe im Durchgang, und
- ein seitliches Organ (K), das im Stande ist, einen seitlichen Kreis (C-E-F-D) auszuführen, der mindestens einen Teil dieser herausgezogenen Gruppe an dieses Auswahlmodul überträgt, um die bezeichnete eingesetzte Gruppe zu bilden, so dass diese eingesetzte Gruppe folglich eine wieder eingesetzte Gruppe bildet, wobei dieser seitliche Kreis einen Verstärkerkomplex (1) einschließt, welcher einen Gewinn mit progressiver Sättigung hat,
wobei diese Vorrichtung **dadurch gekennzeichnet ist, dass** dieser Gewinn des Verstärkerkomplexes (1) ausreichende Werte hat, um eine optische Welle, die in diesem seitlichen Kreis (C-E-F-D) und diesem Verstärkerkomplex verläuft, gleichzeitig mit dieser wieder eingesetzten Gruppe anwachsen zu lassen, wobei dieses Auswahlmodul (J) es dieser Welle ermöglicht, gemäß einer Schleife ohne Ausgang (C-E-F-D-C) zu verlaufen, die außerdem dieses Modul einschließt, diese Welle eine Schleifenwelle bildet, diese Schleife eine Schleife zur Verstärkungsregelung bildet, diese Vorrichtung (J, K) außerdem **dadurch gekennzeichnet ist, dass** sie ein Element zur Spektralrückkopplung (2) enthält, das in dieser Verstärkungsregelungsschleife eingebaut ist, dieses Element eine Wellenlänge außerhalb dieses Übertragungsspektralbereichs begünstigt, so dass dieser Schleifenwelle eine Wellenlänge ebenfalls außerhalb dieses Bereichs vorgeschrieben wird.

4. Vorrichtung gemäß Anspruch 3, **dadurch gekennzeichnet, dass** dieses Auswahlmodul (J) drei Wege (A-B, A-C, D-B) bildet, die diese Gruppe im Durchgang, diese herausgezogene Gruppe beziehungsweise diese eingesetzte Gruppe führen, wobei diese Wege jeweils aus Abschnitten gebildet werden, jeder dieser Abschnitte (A-4, 4-B) dieses Wegs, der die Gruppe im Durchgang führt, auch ein solcher Abschnitt für einen der beiden Wege ist, der die herausgezogene Gruppe beziehungsweise die eingesetzte Gruppe führt.

5. Vorrichtung gemäß Anspruch 4, **dadurch gekennzeichnet, dass** dieses Auswahlmodul (J) die Form eines Moduls zum Einsetzen und Herausziehen mit Sperrfilter (4) aufweist.

6. Vorrichtung gemäß einem der Ansprüche 3 bis 5, **dadurch gekennzeichnet, dass** dieses seitliche Organ ein Schaltorgan (K) ist, das es ermöglicht, auf Befehl entweder diese wieder eingesetzte Gruppe mit dieser Gruppe im Durchgang zusammen zu fügen, um dieses nachgelagerte Multiplex (N) zu bilden, oder diese herausgezogene Gruppe von diesem vorgelagerten (M) und nachgelagertem Multiplex zu entfernen und/oder in dieses nachgelagerte Multiplex andere Kanäle als die dieses vorgelagerten Multiplex einzusetzen.

7. Vorrichtung gemäß einem der Ansprüche 3 bis 6, **dadurch gekennzeichnet, dass** dieses Element zur Spektralrückkopplung (2) ein Bandpassfilter ist, der im seitlichen Kreis (C-E-F-D) in Reihe geschaltet ist und eine geringe, aber ausreichende Selektivität aufweist, um dieser Schleifenwelle eine festgelegte Wellenlänge vorzuschreiben.
